**Europäisches Patentamt**

**European Patent Office**

**Office européen des brevets**

(11) Veröffentlichungsnummer: **0 187 957**
**B1**

(12) **EUROPÄISCHE PATENTSCHRIFT**

(45) Veröffentlichungstag der Patentschrift:
**18.01.89**

(21) Anmeldenummer: **85115786.7**

(22) Anmeldetag: **11.12.85**

(51) Int. Cl.⁴: **G 01 N 3/00**

(54) **Vorrichtung zum Prüfen von in Reihe angeordneter, punktförmiger Verbindungen.**

(30) Priorität: **22.12.84 DE 3447038**

(43) Veröffentlichungstag der Anmeldung:
**23.07.86 Patentblatt 86/30**

(45) Bekanntmachung des Hinweises auf die Patenterteilung:
**18.01.89 Patentblatt 89/3**

(84) Benannte Vertragsstaaten:
**DE FR GB IT SE**

(56) Entgegenhaltungen:
**US-A- 2 959 051**
**US-A- 3 212 326**
**US-A- 4 027 529**
**US-A- 4 159 650**

(73) Patentinhaber: **AUDI AG, Postfach 220,**
**D-8070 Ingolstadt (DE)**

(72) Erfinder: **Singh, Sumanjit, Dr.-Ing., Ahornweg 40,**
**D-8074 Gaimersheim (DE)**

(74) Vertreter: **Engelhardt, Harald, Audi AG Postfach 2 20,**
**D-8070 Ingolstadt (DE)**

## Beschreibung

Die Erfindung bezieht sich auf eine Vorrichtung zum Prüfen von in Reihe angeordneter, punktförmiger Verbindungen zwischen zwei Blechstreifen.

Bekannte punktförmige Verbindungen zwischen zwei Blechen werden meist durch Punktschweissen (MIG, MAG, WIG), Buckelschweissen oder Clinchen erzeugt. Um beispielsweise die Standfestigkeit der Werkzeuge zur Durchführung dieser Verfahren in Abhängigkeit von verschiedenen Maschineneinstellungen oder sonstigen Störeinflüssen zu ermitteln, werden Versuchsreihen durchgeführt, bei denen auf Blechstreifen in Reihe nacheinander die entsprechenden punktförmigen Verbindungen gesetzt werden. Zwischendurch wird in regelmässigem Abstand dieser Vorgang unterbrochen, es werden Einzelproben angefertigt und diese beispielsweise im freien Scherzugversuch geprüft. Wird dabei eine bestimmte, für den jeweiligen Werkstoff und das eingesetzte Verfahren festgelegte Mindestfestigkeit unterschritten, ist entweder der Versuch damit beendet oder er wird mit einer geänderten Maschineneinstellung weitergeführt. Die bis zu diesem Zeitpunkt gesetzten Verbindungen werden addiert und unter Berücksichtigung der gewählten Parameter registriert.

Diese Methode ist sehr zeitaufwendig, da zur Erstellung der erforderlichen Einzelproben der Versuch unterbrochen und die damit verbundenen Beeinträchtigungen des Versuchsergebnisses in Kauf genommen werden müssen. Ein solche Beeinträchtigung kann bei der Prüfung von Punktschweissverbindungen dadurch gegeben sein, dass während der Pausen zur Anfertigung der Einzelproben eine starke Abkühlung der Elektroden eintritt, wodurch die Verhältnisse bei den Versuchen nicht identisch mit denen in der Praxis sind.

Zur Prüfung der Festigkeit von einzelnen Schweisspunkten wird in der US-A-4 027 529 eine Vorrichtung beschrieben, bei der ein Prüfstück in die Vorrichtung eingespannt und dort von Hand ein Schälversuch durchgeführt werden kann. Das Prüfstück besteht aus zwei Winkelstücken, welche durch einen Schweisspunkt zu einem T-förmigen Teil zusammengefügt sind. Die jeweils freien Schenkel der Winkelstücke sind mit je einer Bohrung versehen, durch welche das Prüfstück in die Vorrichtung einhängbar ist. Zu diesem Zweck ist die Vorrichtung mit zwei Bolzen ausgerüstet, wobei sich der eine an dem stationären Abschnitt der Vorrichtung befindet und der andere in Verbindung mit einem Hebel steht. Wird der um eine Achse schwenkbeweglich gelagerte Hebel niedergedrückt, dann entfernen sich die Bolzen voneinander und das ihnen festgelegte Prüfstück wird an seiner Verbindungsstelle aufgetrennt.

Der Erfindung liegt die Aufgabe zugrunde, eine Vorrichtung zum Prüfen von in Reihe angeordneter, punktförmiger Verbindungen zu schaffen, durch welche eine rationellere Prüfung möglich ist.

Die Aufgabe wird durch die Merkmale des Anspruchs 1 gelöst.

Durch die erfindungsgemässe Vorrichtung ist es möglich, Mengenversuche vollautomatisch durchzuführen. Dabei können zwei Blechbänder beispielsweise mit Hilfe einer pneumatisch arbeitenden Taktvorschubeinheit von Coils abgewickelt und anschliessend die Verbindungspunkte gesetzt werden. Ein Elektromotor kann den weiteren Transport der Blechbänder übernehmen. In der Prüfvorrichtung werden die Blechbänder nach dem Schälprinzip getrennt und können anschliessend — zur besseren Abfallbeseitigung — mit einer Schlagschere zerkleinert werden.

Bezüglich der Steuerung für den Vorschub/Transport der Blechbänder sind viele Antriebe und Steuerungen möglich.

Wenn geeignete Massnahmen getroffen sind, ist es ohne weiteres möglich, die Schälkraft jedes einzelnen Verbindungspunktes aufzuzeichnen und/oder auszuwerten. So können beispielsweise die beim Prüfen der Verbindungspunkte auftretenden Drehmomente von einer Drehmomentenmesswelle aufgenommen und in einem Rechner über den Drehwinkel integriert werden. Der so ermittelte Wert wird mit einem in Vorversuchen (Eichung) errechneten Mindestwert für die Festigkeit der einzelnen Verbindungen verglichen. Ein Unterschreiten dieses Mindestwertes hat automatisch eine sofortige Unterbrechung des Versuchs oder eine entsprechende Änderung der Maschineneinstellung zur Folge. Über einen X-Y-Schreiber lassen sich alle Werte in einfacher Weise registrieren.

Vorteilhaft ist, wenn der Einrichtung zur Erzeugung der punktförmigen Verbindung eine Einrichtung oder mehrere Einrichtungen vorgeschaltet ist bzw. sind, welche vorbereitende Bearbeitungen/Behandlungen für das Verbinden durchführt bzw. durchführen und/oder mögliche Störeinflüsse auf das Verbinden simuliert bzw. simulieren.

Durch die erfindungsgemässe Vorrichtung lassen sich je nach Werkzeugausrüstung Punktschweissverbindungen (z.B. nach dem MIG-, MAG- oder WIG-Verfahren), Buckelschweissverbindungen oder Clinchverbindungen prüfen. Für die Prüfung von Buckelschweissverbindungen ist es notwendig, dass vor der Einrichtung zur Durchführung der Buckelschweissung eine Presse zum Buckelprägen vorgeschaltet wird. Um beispielsweise Passungsschwierigkeiten zu simulieren, ist es auch möglich, vor der Einrichtung zur Erzeugung der punktförmigen Verbindungen durch geeignete Vorrichtungen Einfluss auf den Abstand der beiden Blechstreifen zueinander zu nehmen. Andere Störeinflüsse, welche bei den jeweiligen Verfahren von Bedeutung für die Güte der Verbindung sein können, lassen sich gleichsam simulieren. Bei Schweissverbindungen ist es beispielsweise wichtig, in welchem Zustand sich die Oberfläche der zu verbindenden Bleche befindet. Werden in der Praxis etwa Bleche eingesetzt, welche eingeölt sind, dann lässt sich dies bei den Versuchen ebenfalls simulieren, wenn vor der Punkt- oder Buckelschweisseinrichtung mittels einer Vorrichtung Schmiermittel auf die Blechstreifen aufgebracht wird.

Sollen Schweissverbindungen von dünnen, tiefziehfähigen Blechen geprüft werden, dann ist es sehr vorteilhaft, wenn der Schweissvorrichtung eine Stanze nachgeschaltet ist, welche während der Stillstandsphasen nach jedem Schweisspunkt ein Loch stanzt. Durch die Lochung wird bewirkt, dass die entstehende Fahne zerreisst und somit eine Prüfung des nächsten Verbindungspunktes möglich ist. Ohne die Lochung könnte es vorkommen, dass der zuerst geprüfte Schweisspunkt ausknöpft und die Fahne am Butzen nicht abreisst. Im weiteren Verlauf reisst dadurch der Blechwerkstoff zu beiden Seiten des Schweisspunktes auf, so dass das Messergebnis nicht die erzielte Festigkeit der einzelnen Schweisspunkte wiedergibt, sondern nur einen Hinweis auf die Festigkeit des verwendeten Blechwerkstoffes.

Ein Ausführungsbeispiel der Erfindung ist anhand einer Vorrichtung zum Prüfen von Punktschweissverbindungen in der Zeichnung näher dargestellt. Es zeigt

Fig. 1 eine schematisch dargestellte Vorrichtung zur Durchführung von Elektrodenstandmengenversuchen und

Fig. 2 die Prüfeinrichtung der Vorrichtung aus Fig. 1.

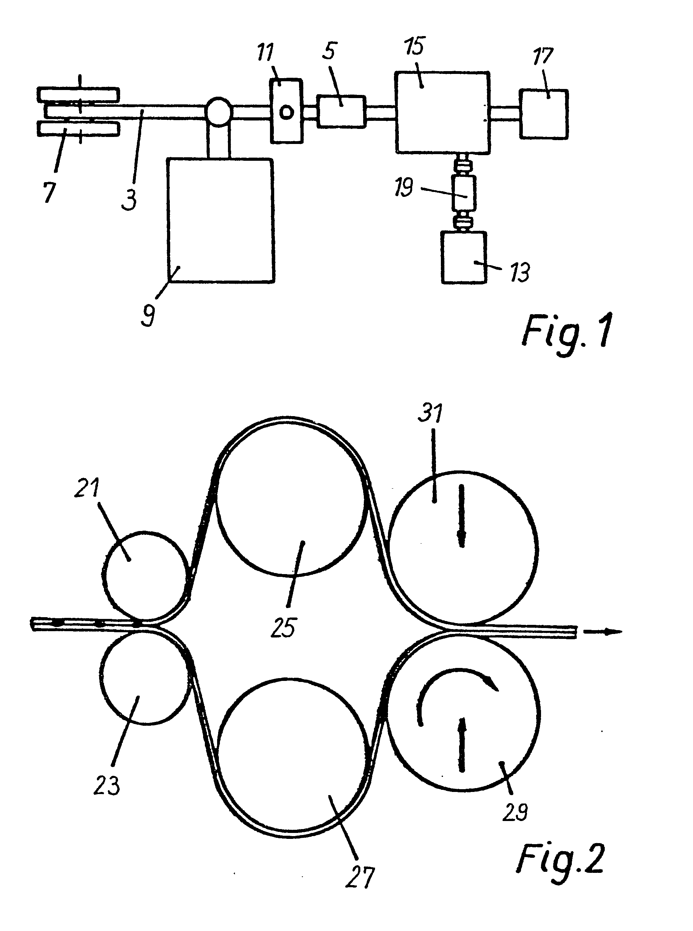

Fig. 1 zeigt die Systemkomponenten, welche für einen automatischen Elektrodenstandmengenversuch notwendig sind. Zwei Blechbänder 3 werden mit Hilfe einer pneumatisch arbeitenden Taktvorschubeinheit 5 von Coils 7 abgewickelt, anschliessend durch eine Punktschweisseinrichtung 9 miteinander verbunden und durch eine Stanze 11 gelocht. Die Taktvorschubeinheit 5 ist so gesteuert, dass während der Stillstandsphasen gleichzeitig Schweisspunkte gesetzt und Löcher gestanzt werden. Die Anordnung der Schweisspunkte erfolgt in Reihe hintereinander; die Anordnung der Löcher so, dass nach jedem Schweisspunkt in Transportrichtung ein Loch folgt.

Der Stanze 11 nachgeordnet ist ein Elektromotor 13, welcher den weiteren Transport der Blechbänder 3 übernimmt. In einer Prüfeinrichtung 15 werden die Blechbänder 3 nach dem Schälprinzip getrennt und zur problemloseren Abfallbeseitigung mit einer nachgeschalteten Schlagschere 17 zerkleinert.

Die beim Prüfen der Schweisspunkte auftretenden Drehmomente werden von einer Drehmomentenmesswelle 19 erfasst und in einem Rechner über den Drehwinkel integriert. Der ermittelte Wert wird mit einem in Vorversuchen (Eichung) errechneten Mindestwert für die Schweisspunktfestigkeit verglichen. Ein Unterschreiten dieses Mindestwertes kann automatisch eine sofortige Unterbrechung des Elektrodenstandmengenversuchs zur Folge haben.

In Fig. 2 ist das Funktionsprinzip der Prüfeinrichtung 15 bei Anwendung des Schälverfahrens näher dargestellt. Nachdem die Blechbänder 3 verschweisst und gestanzt sind und die Taktvorschubeinheit 5 verlassen haben, werden sie zwischen zwei Rollen 21 und 23 geführt und in entgegengesetzte Richtungen umgelenkt, wobei das Schälen in Erscheinung tritt. Durch ein nochmaliges Umlenken mit Hilfe von zwei weiteren Rollen 25 und 27 sowie durch eine Antriebsrolle 29 und eine Druckrolle 31 werden die Blechbänder 3 in ihre urpsrüngliche, horizontale Lage zusammengeführt.

Da es durch die Taktvorschubeinheit 5 nur möglich ist, relativ geringe Kräfte, und nicht die erforderlichen Schälkräfte aufzubringen, scheidet die Möglichkeit aus, die Taktvorschubeinheit 5 hinter die Prüfeinrichtung 15 zu setzen und damit sowohl den Blechvorschub als auch das Schälen zu übernehmen. Deshalb ist für den Schälvorgang ein gesonderter Antrieb notwendig, wobei es wichtig ist, dass die Blechbänder 3 gleichmässig und synchron bewegt werden, da andernfalls der Ort, an dem das Schälen stattfindet, sich unkontrolliert verändert und damit eine Messwertverfälschung nicht ausgeschlossen werden kann.

Gemäss dem Ausführungsbeispiel wird der gesonderte Vorschub dadurch erzeugt, dass die Blechbänder 3 von den Rollen 29 und 31 zusammengedrückt werden, so dass eine reib- und formschlüssige Kraftübertragung durch die antreibende Rolle (Antriebsrolle 29) möglich ist.

## Patentansprüche

1. Vorrichtung zum Prüfen von in Reihe angeordneter, punktförmiger Verbindungen zwischen zwei Blechstreifen (3), gekennzeichnet durch folgende Merkmale:

a) die Vorrichtung umfasst eine Einrichtung (9) zur Erzeugung der punktförmigen Verbindung, eine gesteuerte Vorschubeinheit (5) sowie eine Prüfeinrichtung (15);

b) die Prüfvorrichtung (15) weist mehrere Rollen (21, 23, 25, 27, 29, 31) auf, durch welche nach dem Schälprinzip die Blechstreifen (3) aufgetrennt, durch welche die Blechstreifen (3) geführt, die Schälkräfte übertragen und erfasst werden;

c) der Vorschub ist so gesteuert, dass während der Stillstandsphasen das Verbinden erfolgt und während der Phasen gleichförmiger Vorschubbewegung das Prüfen durchgeführt wird.

2. Vorrichtung nach Anspruch 1, dadurch gekennzeichnet, dass der Einrichtung (9) zur Erzeugung der punktförmigen Verbindungen eine Einrichtung oder mehrere Einrichtungen vorgeschaltet ist bzw. sind, welche vorbereitende Bearbeitungen/Behandlungen für das Verbinden durchführt bzw. durchführen und/oder mögliche Störeinflüsse auf das Verbinden simuliert bzw. simulieren.

3. Vorrichtung zum Prüfen von Punktschweissverbindungen nach Anspruch 1 oder 2, dadurch gekennzeichnet, dass einer Einrichtung (9) zur Erzeugung der Schweisspunkte eine Stanze (11) nachgeschaltet ist, welche während der Stillstandphasen nach jedem Schweisspunkt ein Loch stanzt.

## Claims

1. Apparatus for testing series-arranged point-like connections between two sheet metal strips (3), characterized by the following features:

a) the apparatus comprises a device (9) for producing the point-like connection, a controlled feed unit (5) and also a test device (15);

b) the test device (15) has a plurality of rollers (21, 23, 25, 27, 29, 31) by which the sheet metal strips (3) are split open according to the peeling principle and by which the sheet metal strips (3) are guided and the peeling forces transmitted and sensed;

c) the feed is controlled in such a way that the connection is made during the stationary phases and the testing is carried out during the phases of uniform feed movement.

2. Apparatus according to claim 1, characterized in that one or more devices are arranged upstream from the device (9) for producing the point-like connections, which device or devices carry out preparatory work/treatments for the connection and/or simulate possible troublesome effects on the connection.

3. Apparatus for testing spot-weld connections according to claim 1 or 2, characterized in that arranged down-stream from a device (9) for producing the welding spots is a punch (11) which punches a hole after every welding spot during the stationary phases.

## Revendications

1. Dispositif pour la vérification d'assemblages ponctuels, disposés en ligne, entre deux rubans de tôle (3), caractérisé en ce que:

a) il comprend un dispositif (9) pour exécuter l'assemblage ponctuel, une unité commandée d'amenage (5), ainsi qu'un dispositif d'essai (15);

b) le dispositif d'essai (15) présente plusieurs rouleaux (21, 23, 25, 27, 29, 31) par lesquels les rubans de tôle (3) sont séparés suivant le principe de l'arrachement et par lesquels les rubans de tôle (3) sont guidés et les forces d'arrachement sont transmises et sont détectées;

c) l'amenage est commandé de telle manière que l'assemblage soit effectué pendant des phases d'arrêt et que l'essai soit exécuté pendant des phases de mouvement uniforme d'avance.

2. Dispositif selon la revendication 1, caractérisé en ce qu'il est disposé, en amont du dispositif (9) pour l'exécution des assemblages ponctuels, un ou plusieurs dispositifs qui exécutent des usinages/traitements préparatoires pour l'assemblage et/ou qui simulent d'éventuelles influences perturbatrices sur l'assemblage.

3. Dispositif pour la vérification d'assemblaes par soudage par points selon la revendication 1 ou 2, caractérisé en ce qu'il est disposé, en aval d'un dispositif (9) pour l'exécution des points de soudure, une presse à estamper (11) qui découpe un trou pendant les phases d'arrêt après chaque point de soudure.

Fig. 1

Fig.2